Europäisches Patentamt

**European Patent Office**

Office européen des brevets

(11) Veröffentlichungsnummer: **0 377 811**

**A2**

(12) # EUROPÄISCHE PATENTANMELDUNG

(21) Anmeldenummer: **89121773.9**

(22) Anmeldetag: **24.11.89**

(51) Int. Cl.5: **B01D 53/34, B01D 53/00**

(30) Priorität: **12.01.89 DE 3900728**

(43) Veröffentlichungstag der Anmeldung:
**18.07.90 Patentblatt 90/29**

(84) Benannte Vertragsstaaten:
**AT BE CH DE ES FR GB GR IT LI LU NL SE**

(71) Anmelder: **ARASIN GMBH**
**Weseler Strasse 100**
**D-4223 Voerde/Niederrhein(DE)**

(72) Erfinder: **Glass, Reinhard, Dipl.-Ing.**
**Grünstrasse 9**
**D-4223 Voerde(DE)**

(74) Vertreter: **Seiler, Siegfried**
**c/o DEUTSCHE SOLVAY-WERKE GmbH**
**Langhansstrasse 6 Postfach 11 02 70**
**D-5650 Solingen 11(DE)**

(54) **Verfahren und Vorrichtung zur Reinigung von Abgasen.**

(57) Die vorliegende Erfindung betrifft ein Verfahren und eine Vorrichtung zur Reinigung von Abgasen, wobei der für die Umwandlung der abbaubaren Verunreinigungen erforderliche Sauerstoff zu mehr als 60 % in die obere Hälfte eines Reaktors unter Verwendung von Düsen oder kleinen Austrittsöffnungen in einem Mindestabstand von der Flüssigkeitesoberfläche von mehr als 1/10 der Füllhöhe oder mehr als 25 cm Entfernung von der Flüssigkeitsoberfläche in einer Konzentration von 0,2 mg/l bis 10 mg/l Sauerstoff unterhalb mindestens eines axialfördernden Rührers einer mehrstufigen Rührvorrichtung oder eines mehrstufigen Rührers eingeleitet und fein verteilt werden.

Die mehrstufige Rührvorrichtung enthält mindestens zwei übereinander angeordnete Rührer, von denen mindestens einer ein axialfördernder Rührer ist und weist keine Stromstörstellen auf.

Die Austrittsöffnungen für die Luft sind zu mehr als 50 % zu dem Reaktorboden und/oder in die Richtung der unterhalb der Austrittsöffnungen oder Verteilungsvorrichtungen angeordneten Seitenwänden oder Seitenflächen der unteren Reaktorwände oder des Kernschachtes gerichtet.

### Verfahren und Vorrichtung zur Reinigung von Abgasen

Die vorliegende Erfindung betrifft ein Verfahren und eine Vorrichtung zur Reinigung von Abgasen durch Wäsche mit einer Adsorptionsmittel-Suspension, die gleichmäßig oder nahezu gleichmäßig in einer Gaswaschvorrichtung verteilt und nachfolgend in mindestens einem von der Gaswaschvorrichtung getrennt angeordneten Reaktor geleitet wird. Die biologisch abbaubaren oder umwandelbaren Verunreinigungen werden dort unter Mitverwendung von aeroben Bakterien und Sauerstoff oder sauerstoffhaltigen Gasen mit den in der Flüssigkeit enthaltenen Gasverunreinigungen unter Zwangsbewegung der adsorptionsmittelhaltigen und aerobe Bakterien enthaltenden Waschflüssigkeit umgesetzt und die nach der Umsetzung entstandene gereinigte Flüssigkeit oder Suspension ganz oder in einem Teilstrom zu der Gaswaschvorrichtung zurückgeführt. Im Rahmen der Erfindung gelingt es dieses in der DE-PS ... (Patentanmeldung P 38 30 803.7) beschriebene Verfahren und die Vorrichtung durch eine gezielte Zwangsbewegung im Reaktor und eine gesteuerte Sauerstoffversorgung zu verbessern.

Aus der DE-OS 37 07 575 ist bereits ein Verfahren und eine Vorrichtung zur Reinigung von Abluft oder Abgasen unter Verwendung einer Waschflüssigkeit bekannt, wobei biologisch abbaubare Verunreinigungen von der Wasch flüssigkeit absorbiert oder aufgenommen, transportiert und durch Mikroorganismen abgebaut werden und mindestens einen Teil der Waschflüssigkeit und/oder der in einer Reinigungsvorrichtung enthaltenden Flüssigkeit im Kreislauf geführt wird. Die zu reinigende, mit den Abgasen oder Verunreinigungen beladene Waschflüssigkeit wird in einem Reaktorteilraum in ein darin enthaltendes, im wesentlichen aus Wasser und/oder Waschflüssigkeit bestehendes Gemisch eingeleitet, die eingeleitete Waschflüssigkeit und Reaktorflüssigkeit unter Bildung zirkulierender Ströme oder Wirbel in die übrigen Reaktorräume überführt oder durchtritt diese, wobei die zirkulierende Strömung oder Wirbel durch die eingeleitete zu reinigende Waschflüssigkeit und/oder durch mindesten ein Rührwerk gesteuert oder unterstützt wird. Der für die aerobe Mikroorganismen erforderliche Luft- oder Sauerstoffbedarf wird ganz oder zu mehr als 50 %, vorzugsweise zu mehr als 80 % durch die zugeleitete Waschflüssigkeit gedeckt.

Dieses in der DE-OS 37 07 575 beschriebene Verfahren und die Vorrichtung sind sehr vorteilhaft. Durch die Einleitung von Sauerstoff oder Luft zusammen mit der Flüssigkeit am Boden des Reaktors tritt jedoch ein erheblicher Energieaufwand auf. Darüber hinaus ist die Leistung hinsichtlich der Umsetzung und der Umsetzungsgeschwindigkeit nur befriedigend.

Ziel und Aufgabe der vorliegenden Erfindung war es daher das Verfahren und die Vorrichtung gemäß DE-OS 37 07 575 und P 38 30 803.7 zu verbessern. Insbesondere sollte das Verfahren und die Vorrichtung optimiert werden. Es sollte die Umsetzung, die Umsetzungsgeschwindigkeit, die Flüssigkeitsführung und dgl. im Reaktor durch das Verfahren und durch Änderung von Vorrichtungsteilen in dem Reaktor oder durch neue Vorrichtungen und dgl. verbessert werden.

Erfindungsgemäß wurde festgestellt, daß diesen Zielen und Aufgaben ein Verfahren gerecht wird, bei dem der für die Umwandlung der abbaubaren Verunreinigungen und für die aeroben Bakterien erforderliche Sauerstoff in Form von Luft, Sauerstoff oder sauerstoffhaltigen Gasen zu mehr als 60 % (bezogen auf den erforderlichen Sauerstoffbedarf), vorzugsweise zu 80 bis 200 % in die obere Hälfte des Reaktors unter Verwendung von Düsen oder kleinen Austrittsöffnungen in einem Mindestabstand von der Flüssigkeitsoberfläche von mehr als 1/10 der Füllhöhe oder mehr als 25 cm Entfernung von der Flüssigkeitsoberfläche in einer Konzentration von 0,2 mg/l bis 10 mg/l Sauerstoff, vorzugsweise 1 mg/l bis 7 mg/l Sauerstoff, (bezogen auf den Sauerstoffgehalt pro l Flüssigkeit im Reaktor) unterhalb mindestens eines axialfördernden Rührers einer mehrstufigen Rührvorrichtung oder eines mehrstufigen Rührers eingeleitet und fein verteilt werden.

Luft, Sauerstoff oder sauerstoffhaltige Gase werden gemäß der Erfindung unterhalb und in einem Abstand von der Drehebene der ersten und/oder zweiten Rührerdrehebene von mehr als 10 cm, vorzugsweise in einem Abstand von 15 bis 50 cm, eingeleitet. Der oder die axialfördernde(n) Rührer leitet oder fördert die Flüssigkeit, vorzugsweise die im Bereich des mehrstufigen Rührers vorhandene oder gelangende Flüssigkeit in Richtung des Reaktorbodens und von dort an den Reaktorwänden entlang in einem Abstand von den Reaktorwänden in Gegenrichtung zu der Förderrichtung des axialfördernden Rührers nach oben unter Vermeidung von Strombrechern, Stromstörern oder Stromstörstellen.

Nach einer bevorzugten Ausführungsform beträgt die Umdrehungszahl pro Minute in Abhängigkeit von dem Blatt- oder Propellerradius 5 bis 30, vorzugsweise 8 bis 21.

Die annähernd parallel zur Rührachse nach unten (zum Reaktorboden) geführte und entlang der Seitenwände oder in einem Abstand von den Seitenwänden in Gegenrichtung (nach oben) geführte Strömung wird nach einer Ausführungsform durch Einleiten der Abgas enthaltenden Flüssigkeit unterstützt.

Bevorzugt wird das Verfahren zur Reinigung von Abgasen durch Wäsche mit einer Adsorptionsmittel-Suspension durchgeführt, die mindestens ein feinteiliges Adsorptionsmittel mit einem mittleren Körnungsdurchmesser von 0,0001 mm bis 5 mm enthält. Diese Flüssigkeit, Adsorptionsmittel-Suspension oder -Dispersion wird zumindestens einer Gaswaschvorrichtung kontinuierlich zugeführt, dort verteilt und mit dem Abgas in Kontakt gebracht, die Schadstoffe, Verunreinigungen oder abzutrennenden Stoffe oder ein Teil derselben werden auf biologischem Wege umgesetzt, abgebaut und/oder chemisch oder physikalisch geändert und/oder ganz oder teilweise nachfolgend abgetrennt.

Nach einer bevorzugten Ausführungsform wird die Adsorptionsmittel-Suspension in einer Konzentration (durchschnittliche Anwendungskonzentration) von 40 g/l bis 200 g/l, gleichmäßig oder nahezu gleichmäßig in der Gaswaschvorrichtung verteilt, die Adsorptions mittel-Suspension in der Gaswaschvorrichtung über mindestens eine geordnete Stoffaustauschzone geleitet und in Kontakt mit dem Gas gebracht, danach die adsorptionsmittelhaltige Waschflüssigkeit in mindestens einem, von der Gaswaschvorrichtung getrennt angeordneten Reaktor geleitet. Die biologisch abbaubaren oder umwandelbaren Verunreinigungen werden unter Mitverwendung von aeroben Bakterien und Sauerstoff oder sauerstoffhaltigen Gasen mit den in der Flüssigkeit enthaltenden Gasverunreinigungen unter Zwangsbewegung der adsorptionsmittelhaltigen und aerobe Bakterien enthaltenden Waschflüssigkeit umgesetzt.

Die nach der Umsetzung entstandene gereinigte Flüssigkeit oder Suspension wird ganz oder in einem Teilstrom zu der Gaswaschvorrichtung zurückgeführt, dort verteilt und mit dem zu reinigenden Gas erneut in Kontakt gebracht.

Gemäß einer bevorzugten Ausführungsform der Erfindung erfolgt das Verfahren zur Reinigung von Abgasen durch Wäsche mit einer Adsorptionsmittel-Suspension, wobei das feinteilige Adsorptionsmittel einen mittleren Körnungsdurchmesser von 0,0001 mm bis 5 mm, vorzugsweise 2 mm, aufweist, und zumindestens einer Gaswaschvorrichtung kontinuierlich zugeführt, dort verteilt und mit dem Abgas in Kontakt gebracht, wobei nach einer Ausführungsform auch ohne Adsorptionsmittel gearbeitet wird. Die Schadstoffe, Verunreinigungen oder abzutrennenden Stoffe oder ein Teil derselben wird auf biologischem Wege nachfolgend im Reaktor umgesetzt, abgebaut und/oder chemisch oder physikalisch geändert und/oder ganz oder teilweise nachfolgend abgetrennt.

Gemäß einer bevorzugten Ausführungsform des erfindungsgemäßen Verfahrens wird die Adsorptionsmittel-Suspension in einer Mindestberieselungsdichte von 3 bis 40 m³/m²h, vorzugsweise 5 bis 25 m³/m²h, in der Gaswaschvorrichtung verteilt.

Gemäß der vorliegenden Erfindung beträgt die mittlere Verweilzeit der Adsorptionsmittel-Suspension in der Gaswaschvorrichtung oder der Stoffaustauschzone der Gaswaschvorrichtung weniger als 40 sek, während die mittlere Verweilzeit der aerobe Bakterien enthaltenden Adsorptionsmittel-Suspension im Reaktor ein Mehrfaches beträgt. Zweckmäßig wird eine um mehr als das 90-fache, vorzugsweise mehr als das 150-fache, der mittleren Verweilzeit (als die Verweilzeit in der Gaswaschvorrichtung oder Stoffaustauschvorrichtung) eingehalten. Dadurch wird u. a. erreicht, daß in Kombination mit der einzuhaltenden Konzentration an Adsorptionsmitteln sowohl in Anwesenheit als auch in Abwesenheit von aeroben Bakterien in der Gaswaschvorrichtung gearbeitet werden kann, die Gefahr des Zuwachsens durch Bakterienkulturen und andere Stoffe in der Gaswaschvorrichtung wird vermindert und/oder die Gefahr der Blockierung der Adsorptionsmittelteilchen durch Umwachsung mit Bakterien wird vermindert.

Nach einer vorzugsweisen Ausführungsform erfolgt die Zwangsbewegung im Reaktor mit einer derartigen Geschwindigkeit, daß im Durchschnitt mehr als 1 dm³ Adsorptionsmitteldispersion oder Waschflüssigkeit in weniger als 30 sek, vorzugsweise in weniger als 10 sek, um mehr als 1 dm bewegt wird. Die Zwangsbewegung erfolgt nach einer Ausführungsform mit einer Geschwindigkeit von mehr als 0,05 m/sec, vorzugsweise mit einer Geschwindigkeit von 0,1 m/sec bis 0,35 m/sec.

Als Adsorptionsmittel kommen die an sich bekannten Adsorptionsmittel, z. B. Zeolith, Silicagel und dgl. in Frage. Bevorzugt wird jedoch Aktivkohle eingesetzt. Nach einer Ausführungsform kann die Aktivkohle auch aus aktivkohlehaltigen Substanzen bestehen oder diese enthalten, so z. B. feinstgemahlene Steinkohle, Braunkohle, Steinkohlen-, Braunkohlen- oder Torfkokse und dgl.

Nach einer bevorzugten Ausführungsform besteht die Adsorptionsmittel-Suspension aus einer wäßrigen Aktivkohle-Suspension oder einer wäßrigen adsorptive Kohle enthaltenden Suspension, enthaltend Aktivkohle mit einem mittleren Körnungsdurchmesser von 0,005 mm bis 1 mm. Die wäßrige Aktivkohle-Suspension wird bevorzugt in einer durchschnittlichen Anwendungskonzentration von 50 g/l bis 150 g/l in der Gaswaschvorrichtung verteilt. Eine Vernebelung der Suspension soll vermieden werden, da dabei nicht die kurzen Verweilzeiten eingehalten werden können, andererseits die Gefahr der Verstopfung der Düsen besteht. Die Verweilzeit der adsorptionsmittelhaltigen und aerobe Bakterien enthaltenden Waschflüssigkeit im Wirbelreaktor unter Zwangsbewegung beträgt 1 bis 4 Std, vorzugsweise 2 bis 3 Std.

Bei der biologischen Umsetzung im Reaktor wird die zu reinigende Waschflüssigkeit und/oder die Waschflüssigkeit in der Gaswaschvorrichtung auf einen pH-Wert von 5,5 bis 8,5, vorzugsweise 6 bis 8, eingestellt. In diesem pH-Bereich sind die Abbaureaktionen am zweckmäßigsten durchführbar. Die geordnete Stoffaustausch zone besteht gemäß der Erfindung aus Stoffaustauschvorrichtungen mit einem großen freien Durchlaß- oder Durchflußvermögen, die in, parallel oder annähernd parallel zu der Strömungsrichtung, Rieselrichtung oder Durchflußrichtung der Adsorptionsmittelsuspension und/oder senkrecht oder annähernd senkrecht im Waschturm angeordnet sind.

Nach einer Ausführungsvariante des Verfahrens wird ein Teil der Aktivkohle nach dem Durchtritt durch mindestens eine Gaswaschvorrichtung abgetrennt und dieser Teil der aktivkohlehaltigen Flüssigkeit im Kreislauf geführt und der gereinigten Aktivkohlesuspension, die aus dem Reaktor kommt, zur Einhaltung der Anwendungskonzentration zugefügt.

Das erfindungsgemäße Verfahren arbeitet unabhängig von der Baktereienkonzentration in der Wachvorrichtung, d. h. auch bei Nichtanwesenheit von Bakterien oder bei der Mitwirkung von Bakterien. Es weist eine gute Ausbeute hinsichtlich der biologisch abbaubaren Stoffe auf. Das Risiko, daß durch Bakterien oder ggf. Belebtschlamm im Waschwasserturm ein Zuwachsen und/oder ein weitgehende Blockierung der Adsorptionsmittel auftritt, ist verringert. Weiterhin gelingt es, den Abscheidegrad schlecht wasserlöslicher, begrenzt wasserlöslicher oder weitgehend wasserunlöslicher Schadstoffe zu erhöhen und somit auch eine größere Menge dieser Verbindungen biologisch abzubauen. Solche organischen biologisch abbaubaren Schadstoffe sind u.a. Benzol, Benzolderivate und andere aromatische Kohlenwasserstoffe.

Die zu reinigende Waschflüssigkeit wird gemäß der Erfindung in einen Reaktorteilraum in ein darin enthaltenes, im wesentlichen aus Wasser und/oder Waschflüssigkeit bestehendes Gemisch (Reaktorflüssigkeit) eingeleitet. Die eingeleitete adsorptionsmittelhaltige Waschflüssigkeit und Reaktorflüssigkeit tritt dabei unter Bildung zirkulierender Ströme in den übrigen Reaktorraum über oder durchtritt diesen. Die Bildung der zirkulierenden Ströme wird bevorzugt durch die mehrstufige axialfördernde Rührvorrichtung, sowie auch in einem gewissen Umfang durch eingeleitete, zu reinigende Waschflüssigkeit, vorzugsweise durch den Waschflüssigkeitszuleitungspumpendruck und/oder eingeleitetes zum Reaktorboden gerichtetes sauerstoffhaltiges Gas unterstützt oder gesteuert.

Nach einer Ausführungsform erfolgt die für die aeroben Mikroorganismen erforderliche Luft- oder Sauerstoffzuführung zusätzlich, jedoch zu weniger als 50 %, vorzugsweise zu weniger als 80 %, (bezogen auf den erforderlichen Sauerstoff- bzw. Luftbedarf) durch die zugeleitete Waschflüssigkeit aus der Gaswaschvorrichtung.

Die den Reaktor durchlaufende adsorptionsmittelhaltige Waschflüssigkeit durchströmt nach einer Ausführungsform während des vollständigen oder teilweisen Abbaues der biologisch abbaubaren Verunreinigungen der Waschflüssigkeit durch aerobe Mikroorganismen mindestens einen oberhalb des Bodens des Reaktors angeordneten Reaktorteilraum, vorzugsweise mindestens einen Einleitungsschacht oder eine Einleitungsröhre, bevor die gereinigte Waschflüssigkeit in die Gaswaschvorrichtung geleitet wird.

Im Rahmen der vorliegenden Erfindung gelingt es, aus dem Abgas die unterschiedlichsten Schadstoffe zu entfernen und auf biologischem Wege abzubauen. Biologisch abbaubar sind beispielsweise aromatische Kohlenwasserstoffe, Alkohole, Ester, Ketone, Aldehyde, organische Lösemittel und dgl.

Nach einer bevorzugten Ausführungsform wird die Flüssigkeit im Reaktorraum (Reaktorflüssigkeit) auf eine Temperatur von 10 bis 50 °C, vorzugsweise 17 bis 30 °C, eingestellt.

Bevorzugt wird dabei die Waschflüssigkeit von unten oder am Boden des Reaktors so eingeleitet, daß sie in und unterhalb des Reaktorteilraumes, vorzugsweise an der Peripherie und außerhalb des Einleitungsschachtes oder der Einleitungsröhre, oder von oben her in die obere Hälfte des Reaktorraums eintritt. Nach einer vorzugsweisen Ausführungsform ist bzw. sind der Einleitungsschacht bzw. die Einleitungsschächte oder die Einleitungsröhre oder -röhren in einem Abstand von den Seitenwänden, möglichst annähernd in der Nähe einer Mittellinie oder annähernd zentral angeordnet.

Nach einer anderen Ausführungsform wird die Waschflüssigkeit vor und/oder nach der Einleitung in den Reaktor- oder Reaktorteilraum mit einem chemischen Wasserbehandlungsmittel, vorzugsweise Flockungsmittel und/oder Polyelektrolyt, behandelt und von gebildeten Ausfällungen oder Schlämmen abgetrennt.

Nach einer vorzugsweisen Ausführungsform wird mindestens ein Teil der im Reaktor gereinigten adsorptionsmittelhaltigen Waschflüssigkeit oder teilweise gereinigten adsorptionsmittelhaltigen Waschflüssigkeit im Kreislauf (vorzugsweise unter Einschaltung von Pumpen und dgl.) und bei einer anderen Eintrittsstelle des Reaktors zurückgeführt.

Dadurch gelingt es, innerhalb des Verfahrens das System auf wechselnde Schadstoffkonzentrationen einzustellen. Die Maßnahme wird auch vorzugsweise kombiniert mit einer teilweisen Zurückführung der schadstoffhaltigen Adsorptionsmittelsuspension aus der Waschvorrichtung zu der Flüssigkeitsverteilervorrichtung in der Waschvorrichtung, vorzugsweise unter Mitverwendung eines Teilstromes aus dem Reaktor.

Die Erfindung betrifft weiterhin eine Vorrichtung zur Umsetzung (Reaktor), wobei die Rührvorrichtungen des Reaktors aus mindestens einem mehrstufigen Rührer besteht und die Austrittsöffnungen der Luft- oder Gaszuleitungsvorrichtung in der oberen Hälfte des Reaktors unterhalb des oberen Rührers oder der oberen Rührer angeordnet sind.

Die Austrittsöffnung der Luft- oder Gaszuleitungen sind gemäß der erfindungsgemäßen Vorrichtung in der oberen Hälfte des Reaktors um die Rührerachse in einem gleichen oder annähernd gleichen Abstand von der Rührerachse angebracht und/oder die Luft- oder Gasaustrittsöffnung sind im gleichen oder annähernd gleichen Abstand voneinander angeordnet.

Die Verteilungsvorrichtungen der Luft- oder Gaszuleitungen und/oder die Austrittsöffnungen für Luft oder Gas weisen gemäß der Erfindung nach einer bevorzugten Ausführungsform im Reaktor mindestens eine Anordnung in Form eines gleichseitigen Mehreckes oder eines Rin ges auf und sind in mindestens einer zur Rührachse senkrechten Ebene oder nahezu senkrechten Ebene angeordnet.

Die mehrstufige Rührvorrichtung weist mindestens zwei, vorzugsweise drei bis acht übereinander angeordnete Rührer auf, von denen mindestens einer ein axialfördernder Rührer ist.

Die Austrittsöffnungen oder Düsen der Verteilungsvorrichtungen oder die Austrittsöffnungen oder Düsen der Luft- oder Gaszuleitungen sind zu mehr als 50 % (bezogen auf die Anzahl der angeordneten Düsen oder Öffnungen), vorzugsweise mehr als 75 %, zu dem Reaktorboden und/oder in die Richtung der unterhalb der Austrittsöffnungen oder Verteilungsvorrichtungen angeordneten Seitenwänden oder Seitenflächen der unteren Reaktorwände oder des Kernschachtes gerichtet.

Nach einer bevorzugten Ausführungsform beträgt der Rührerdurchmesser 1/4 bis 8/10 des Durchmessers des Reaktors und/oder 1/4 bis 8/10 des mittleren Durchmessers des um den mehrstufigen Rührer angeordneten Schachtes.

Nach einer weiteren bevorzugten Ausführungsform ist die ringförmige Verteilungsvorrichtung unterhalb der ersten und/oder zweiten oberen Rührvorrichtungen, vorzugsweise Blattrühr- und/oder Propellerrührervorrichtung in einem Abstand von der Rührerdrehebene von 5 bis 50 cm, vorzugsweise 10 bis 30 cm, angeordnet. Die Düsen oder Austrittsöffnungen für den Sauerstoff, die Luft oder die sauerstoffhaltigen Gase sind dabei zu mehr als 75 % (bezogen auf sämtliche Düsen oder Austrittsöffnungen der Verteilungsvorrichtung) vorzugsweise zu 90 bis 100 % auf der unteren, dem Reaktorboden zugewandten Fläche der ringförmigen Verteilungsvorrichtung angeordnet und der Radius des oder der Propeller oder Blätter der Rührer ist gleich groß, vorzugsweise größer als der mittlere Abstand der Düsen oder Austrittsöffnungen von der Rührerachse.

Die Propeller oder Blätter mindestens einer Rührvorrichtung des mehrstufigen Propeller- oder Blattrührers weisen eine Neigung zur Drehebene des Propellers oder Blattes und/oder eine Profilierung, vorzugsweise eine tragflügelähnliche Profilierung, auf.

Die Neigung der Propeller oder Blätter zur Rühr- oder Propellerdrehachse oder Blattdrehachse beträgt 5 bis 50 °, vorzugsweise 10 bis 30 °, und die Axialförderung mindestens eines Rührers ist zum Reaktorboden gerichtet.

Der Reaktor weist bevorzugt keine Strombrecher, Stromstörer oder Stromstörstellen auf.

Nach einer bevorzugten Ausführungsform ist die Eintrittsöffnung für die Abgas, Abluft oder Abwasser enthaltende Flüssigkeit oberhalb oder unterhalb des oberen Rührers und/oder am Reaktorboden, vorzugsweise in der Peripherie des Reaktorbodens angeordnet und besteht aus mindestens einer Eintrittsstelle, vorzugsweise mehreren annähernd gleichmäßig über die Peripherie des Reaktorbodens verteilten Eintrittsstellen.

Der obere axialfördernde Rührer der mehrstufigen Rührvorrichtung ist bevorzugt in einer Höhe von 2/3 bis 4/5 H (H = Reaktorhöhe) angeordnet.

Nach einer weiteren bevorzugten Ausführungsform weist der Reaktorboden eine konvexe Wölbung auf oder eine zylinderstumpf-, pyramidenstumpf-, halbkugel- oder kugelsegmentähnliche Form oder eine ähnliche Bodenwölbung auf.

Nach einer bevorzugten Ausführungsform ist im oberen Drittel des Reaktors, vorzugsweise im oberen Viertel des Reaktors und/oder in einem senkrechten Abstand von mehr als 6 cm, vorzugsweise mehr als 15 cm, von dem oberen Rand des Schachtes oder Kernschachtes ein Strömleitvorrichtung, vorzugsweise eine trichterähnliche, kugelsegmentförmige, pyramidenstumpfähnliche Leitvorrichtung, die im wesentlichen frei von Stromstörstellen oder strombrechenden Teilen oder Ausbildungen ist, angeordnet.

Die mehrstufige Rührvorrichtung mit mindestens einem oberen axialfördernden Rührer, vorzugsweise mehreren axialfördernden Rührern, ist somit bevorzugt in einem zylinderähnlichen oder trichterförmigen Schacht oder in einem im Querschnitt ein gleichseitiges Mehreck bildenden prismatischen Schacht oder Kernschacht, dessen untere Kante mehr als 7 cm, vorzugsweise mehr als 20 cm (gemessen in senkrechter Richtung vom Reaktorboden), vom Reaktorboden angeordnet. Mindetens eine Verteilungsvorrichtung für Sauerstoff oder Luft ist in ringähnlicher Form im Schacht oder Kernschacht unterhalb des ersten und/oder zweiten axialfördernden Rührers angebracht. Im Reaktor sind keine Trägervorrichtungen oder Trägereinbauten für die Mikroorganismen vorhanden, sondern feinpulverige oder feinteilige Trägerstoffe mit einem mittleren Körnungsdurchmesser unter 1.000 μm, vorzugsweise unter 750 μm.

Die vorliegende Erfindung betrifft weiterhin eine Vorrichtungskombination zur Reinigung von Abgasen, enthaltend mindestens eine Gaswaschvorrichtung für den Kontakt einer Adsorptionssuspension mit dem Abgas, mindestens eine Vorrichtung oder einen Reaktor zum biologischen Abbau der Gasverunreinigungen oder Schadstoffe, unter Mitverwendung von aeroben Bakterien sowie ggf. eine Vorreinigungsvorgang, wobei die Vorrichtungen unmittelbar oder mittelbar in an sich bekannter Weise in Verbindung stehen. In der Gaswaschvorrichtung ist vorzugsweise eine geordnete Stoffaustauschzone angeordnet.

Nach einer bevorzugten Ausführungsform der erfindungsgemäßen Vorrichtung weisen die Austrittsöffnungen für Luft oder Gas in der Verteilungsvorrichtung, vorzugsweise in der ringförmigenVerteilungsvorrichtung einen mittleren Durchmesser unter 2 mm, vorzugsweise 0,01 bis 1,5 mm, auf. In diesem Fall kann die Umdrehungszahl der mehrstufigen Rührvorrichtung mit axialfördernden Rührern etwas verringert werden. Die Austrittsöffnungen für Luft oder Gas müssen vollständig oder zum überwiegenden Teil zum Reaktorboden gerichtet sein bzw. in Gegenrichtung zur Flüssigkeitsoberfläche der im Reaktor befindlichen Flüssigkeit.

Nach einer anderen Ausführungsform werden mindestens eine, vorzugsweise mehrere größere Austrittsöffnungen für Luft odder sauerstoffhaltige Gase in der Verteilungsvorrichtung verwendet, deren Durchmesser größer als 2 mm ist. In diesem Fall wird die Umdrehungszahl des mehrstufigen axialfördernden Rührers innerhalb der angegebenen Umdrehungszahlen des Rührers pro Minute erhöht. Auch hier müssen alle Austrittsöffnungen oder der überwiegende Teil der Austrittsöffnungen zum Reaktorboden oder in Gegenrichtung der Flüssigkeitsoberfläche gerichtet sein.

Durch die erfindungsgäße Vorrichtung und das erfindungsgemäße Verfahren gelingt es eine hohe Verweilzeit der Gasblasen im Reaktor durch eine gezielte und definierte Flüssigkeitsführung zu erhalten und somit auch einen hohen Nutzungsgrad oder eine hohe Sauerstoffausbeute des eingeführten Sauerstoffes zu erhalten. Durch die erfindungsgemäße Vorrichtung und das Verfahren erfolgt die Sauerstoffversorgung der Mikroorganismen im Reaktor mit einem minimalen Energieaufwand für die Gaseintragung. Der Energiebedarf für die Rührvorrichtung zur Dispergierung der Gasblasen ist gering und weiterhin ist ein hoher Sauerstoffeintrag durch Feinstverteilung der Gasblasen gegeben.

Die Erfindung betrifft weiterhin eine Vorrichtungskombination zur Reinigung von Abgasen, enthaltend mindestens eine Gaswaschvorrichtung für den Kontakt einer Adsorptionssuspension mit dem Abgas, mindestens den Reaktor zum biologischen Abbau der Gasverunreinigungen oder Schadstoffe, unter Mitverwendung von aeroben Bakterien sowie ggf. eine Vorreinigungsvorrichtung, wobei die Vorrichtung unmittelbar oder mittelbar in an sich bekannter Weise in Verbindung stehen. Gemäß der Erfindung ist in der Gaswaschvorrichtung eine geordnete Stoffaustauschzone angeordnet, bestehend aus rohrähnlichen oder prismenförmigen Stoffaustauschvorrichtungen oder Rieselkörpern, die ein großes, freies Durchlaß- oder Durchflußvermögen aufweisen, die in, parallel oder annähernd parallel zur Strömungsrichtung, Rieselrichtung oder Durchflußrichtung der Adsorptionsmittelsuspension und/oder senkrecht oder annähernd senkrecht im Waschturm angeordnet sind. Der Reaktor ist mit mindestens einer mehrstufigen axialfördernden Rührvorrichtung zur Zwangsbewegung der Adsorptionssuspension und aeroben Bakterien versehen.

Die rohrähnlichen oder prismenförmigen Stoffaustauschvorrichtungen oder Rieselkörper im Waschturm oder der Gaswaschvorrichtung weisen vorzugsweise durchlochte, unterbrochene oder netzartige Seitenwandungen auf.

Gemäß der Erfindung ist die Gaswaschvorrichtung mit mindestens einer Rohr- oder Schlauchleitung versehen, die unmittelbar oder unter Einschaltung von weiteren Reinigungsvorrichtungen zu der Mikroorganismen enthaltenden Reinigungsvorrichtung (Reaktor) führt, die dort durch eine weitere Rohr- oder Schlauchleitung mit dem Waschturm in Verbindung steht. Die Mikroorganismen enthaltende Reinigungsvorrichtung (Reaktor) ist nach einer Ausführungsform durch mindestens eine Trennwand, vorzugsweise durch einen Trennschacht oder eine Trennröhre, in einen Einleitungsschachtraum und den übrigen Reaktorraum getrennt.

Nach einer Ausführungsform weist der Trennschacht oder die Trennröhre Unterbrechungen, Schlitze, Löcher und/oder Ausnehmungen auf.

Bevorzugt werden mehrere hintereinander oder nebeneinander geschaltete Gaswaschvorrichtungen und/oder Reaktoren eingesetzt.

Nach einer anderen Ausführungsform besteht der Trennschacht oder die Trennröhre aus mehreren übereinander angeordneten Trennschächten oder Trennröhren.

Der Trennschacht kann auch trichterförmig ausgebildet sein und in der Nähe der Eintrittsstelle für die Waschflüssigkeit einen kleineren oder größeren Durchmesser (bezogen auf den oberen Durchmesser) aufweisen, jedoch sollten die Abweichungen im Durchmesser gering sein. Vorzugsweise weist der Trennschacht oder die Trennröhre sowohl an der Eintrittsstelle, als auch an der Austrittsstelle den gleichen Durchmesser oder annähernd den gleichen Durchmesser auf.

Weiterhin ist nach einer Ausführungsform der Reaktorboden schräg oder konkavähnlich ausgebildet und/oder enthält mindestens eine schräg oder konkavähnlich angeordnete Bodenplatte.

Nach einer bevorzugten Ausführungsform ist der Waschturm mit mindestens einem weiteren Behälter verbunden oder versehen oder vorzugsweise im unteren Teil des Waschturmes mit einer Waschflüssigkeitsvorlage (als Teilraum des Waschturmes) versehen. In diese Behälterteilräume oder Behälter wird die im Gegenstrom zum Gas geleitete Waschflüssigkeit gesammelt, bevor die mit den Abgasen oder Verunreinigungen beladene Waschflüssigkeit erneut in den Waschturm und/oder in den Reaktor oder Reaktorteilraum gelangt.

Nach einer weiteren vorzugsweisen Ausführungsform ist in der Gaswaschvorrichtung ein Schrägboden oder trichterförmiger Boden zur besseren Ableitung der schadstoffhaltigen adsorptionsmittelhaltigen Suspension zu dem Reaktor oder zur Zurückleitung angeordnet.

Zeichnungsbeschreibung:

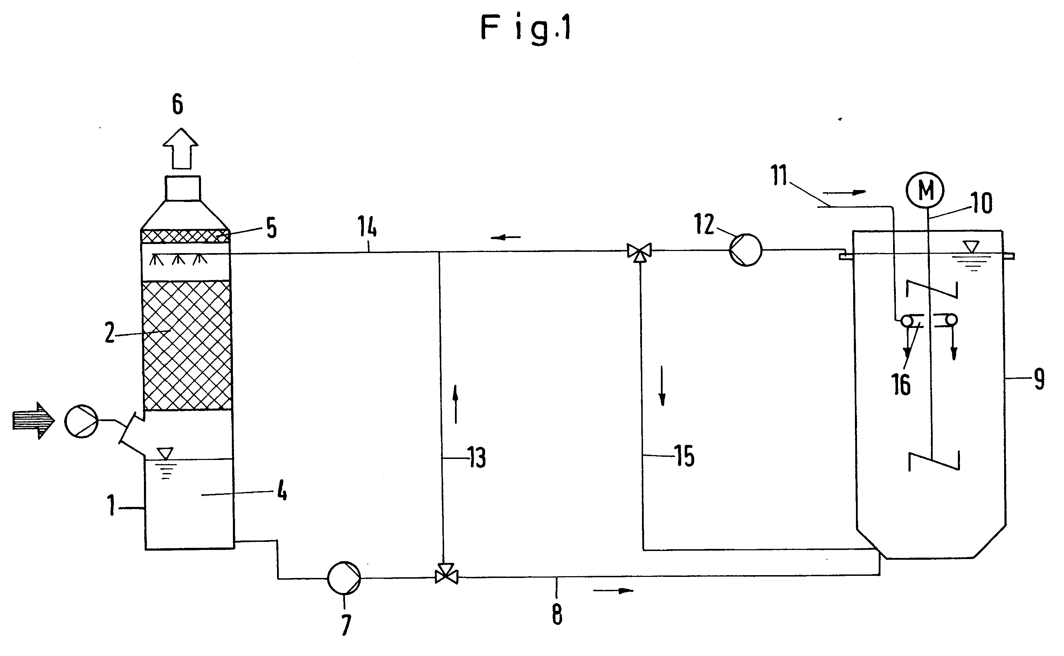

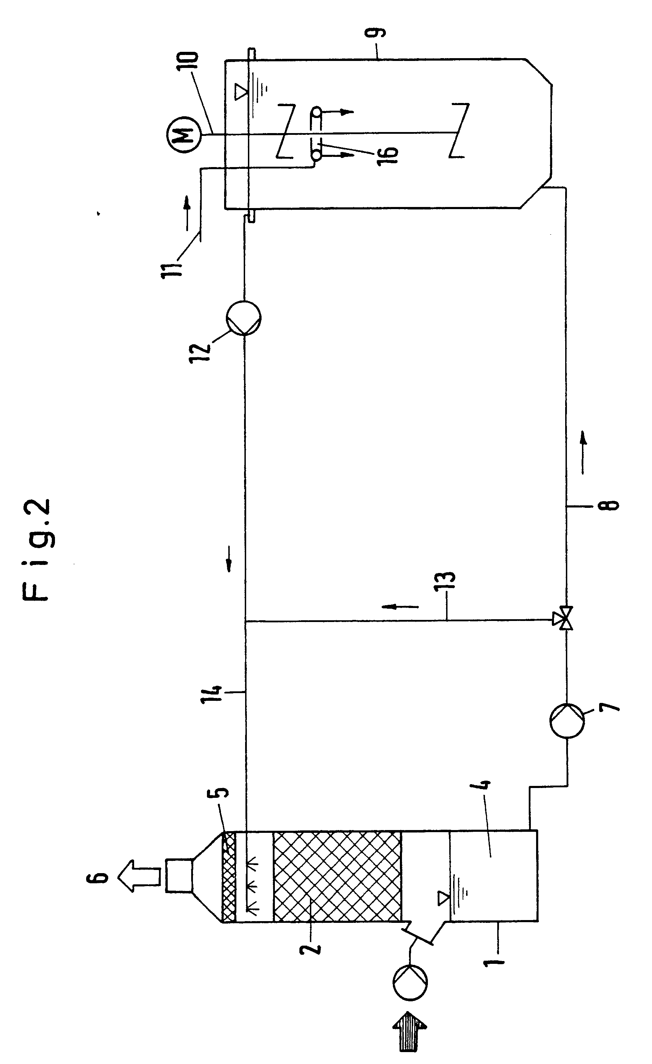

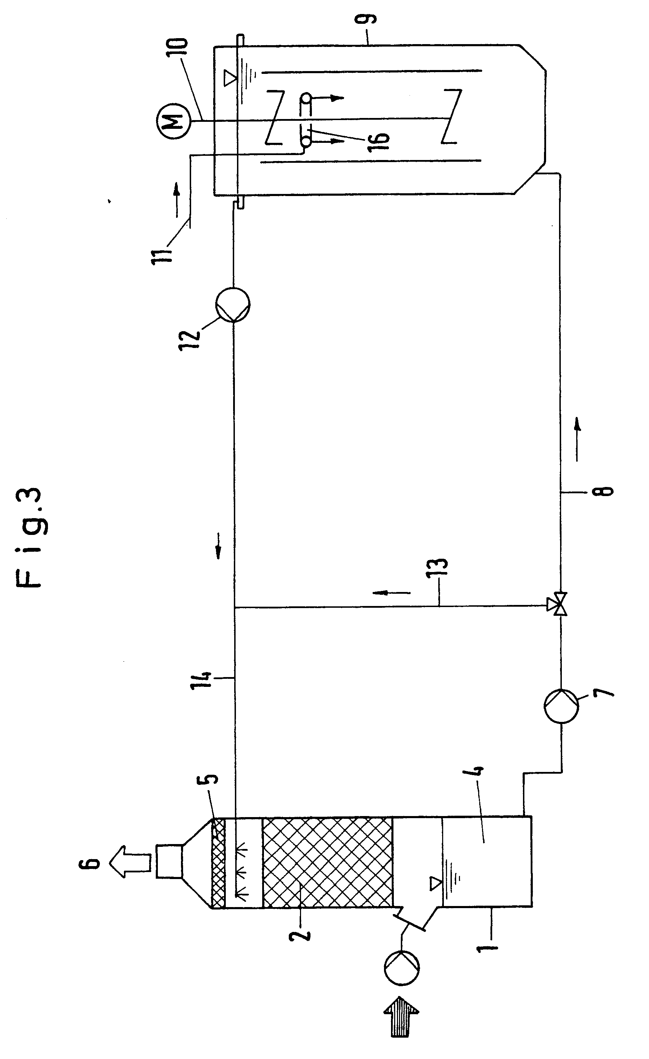

In den beigefügten Figuren 1 bis 6 sind schematisch bevorzugte Ausführungsformen der Erfindung dargestellt.

In den Figuren 1 bis 6 ist ein Schnitt durch den Reaktor (9) dargestellt, der die zu reinigende schadstoffbeladene Flüssigkeit, aerobe Bakterien sowie nach einer vorzugsweisen Ausführungsform fein verteilte Adsorptionsmittel, z.B. feinteilige Aktivkohle, enthält. Die mehrstufige Rührvorrichtung enthält mindestens einen, vorzugsweise zwei oder mehrere Blatt- oder Propellerrührer, von denen mindestens einer ein axialfördernder Rührer ist. Luft, Sauerstoff oder sauerstoffhaltige Gase werden über die Zuleitungsvorrichtung (11) einer Verteilungsvorrichtung (16), vorzugsweise einer ringförmigen Verteilungsvorrichtung (16), zugeführt. Die Austrittsöffnungen für Luft, Sauerstoff oder sauerstoffhaltige Gase sind auf der dem Reaktorboden zugewandten Oberfläche oder Fläche der Verteilungsvorrichtung angeordnet, so daß eine nach unten bzw. zum Boden gerichtete Strömung erzielt wird. Die Verteilungsvorrichtung ist vorzugsweise unterhalb eines axialfördernden Rührers angeordnet.

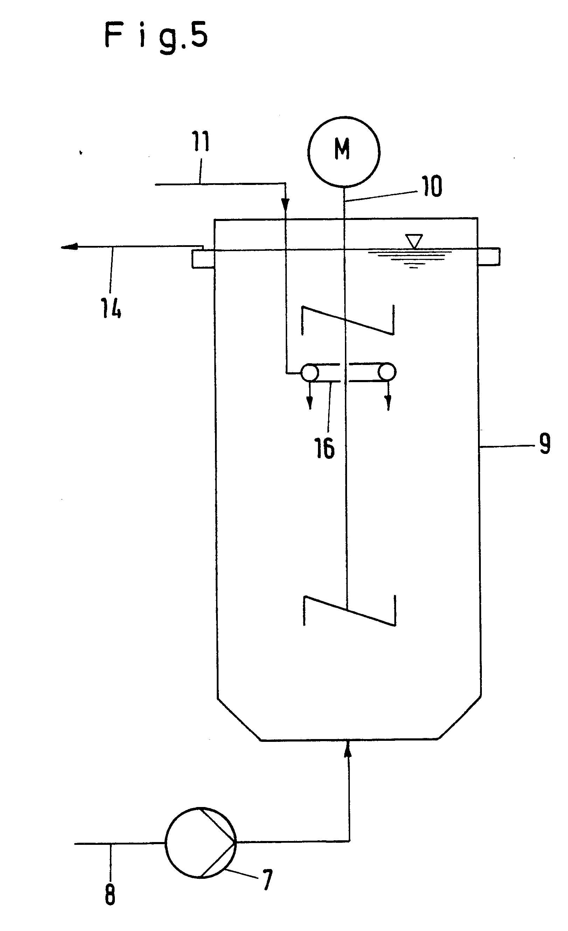

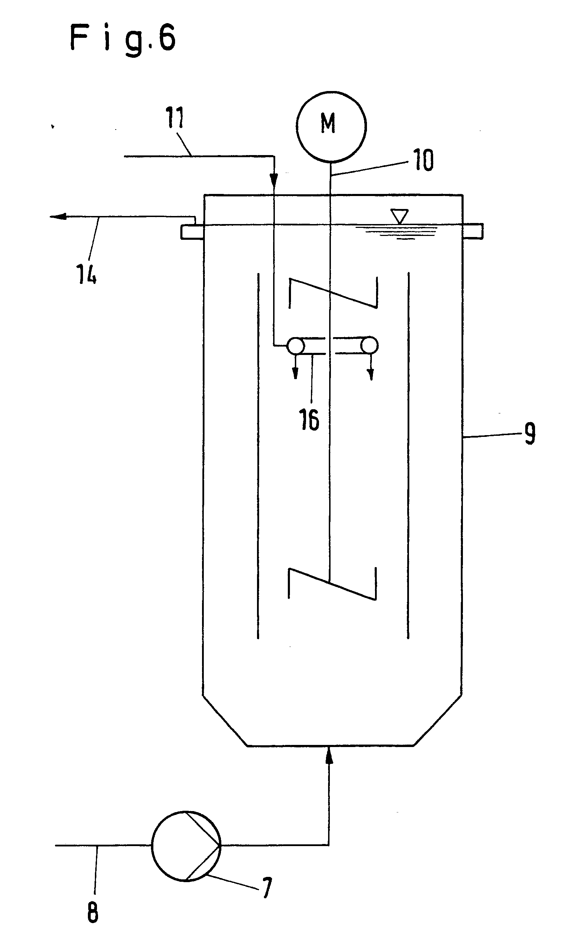

Der Reaktor (9) mit der mehrstufigen Rührvorrichtung und der unterhalb des axialfördernden Rührers angeordneten Lufteintragsvorrichtung mit den zum Reaktorboden gerichteten Austrittsöffnungen oder Düsen für Luft ist in den Figuren 5 und 6 im Schnitt allein dargestellt, wobei die Figur 5 eine Ausführungsform ohne, die Figur 6 eine Ausführungsform mit Kernschacht oder Einleitungsschacht schematisch darstellt. In den Figuren 1 bis 4 wird schematisch die Kombination des Reaktors mit der Gaswaschvorrichtung gezeigt.

Im Absorber (1) (Waschturm, Gegenstromwäscher) wird zur Minderung von Schadstoffen das Gas im Gegenstrom zum Waschmedium durch den Absorber geführt. Dabei gelangt das bei (3) eintretende Gas nach einer vorzugsweisen Ausführungsform in die geordnete Füllkörperzone (2), in der ein intensiver Stoffaustausch zwischen dem Waschmedium und dem Gas stattfindet. Der Stoffaustausch beruht auf einer physikalischen Absorption. Bevor die gereinigte Abluft den Absorber verläßt und in die Atmosphäre gelangt, wird sie von mitgerissenen Flüssigkeitströpfchen in einer integrierten Tropfenabscheiderzone (5) befreit.

Das Waschmedium wird entgegen der Gasströmungsrichtung über eine spezielle Verteilerebene unterhalb der Tropfenabscheiderzone in den Absorber eingebracht. Nachdem die Flüssigkeit zum intensiven Stoffaustausch die geordnete Füllkörperzone passiert hat, gelangt sie mit den Schadstoffen beladen in das Wäscherunterteil, das als Flüssigkeitsvorlage (4) dient.

Über die Leitung (8) wird das Waschmedium im Kreislauf geführt, wobei ein Teilstrom mittels Pumpe (7) in den Reaktor (9) gefördert wird. Die in den Reaktor einströmende Waschflüssigkeit wird unter Verwendung der mehrstufigen axialfördernden Rührvorrichtung und der annähernd in axialer Richtung nach unten eingeleiteten sauerstoffhaltigen Gase in eine Strömung versetzt, welche ohne oder unter Mitverwendung entsprechende Einbauten (Einleitungsschacht, Kernschacht) in axialer Richtung entlang der Rührvorrichtung nach unten (zum Reaktorboden und von da entlang der Reaktorseitenwänden nach oben geführt wird.

Im Reaktor (9) befinden sich aerobe Mikroorganismen welche entweder frei in der Waschflüssigkeit vorliegen oder auf geeignetem Trägermaterial (z. B. Aktivkohle, keramische Körper und dgl.) mit einer hohen inneren Oberfläche angeordnet sind. Nach dem vollständigen oder teilweisen Abbau der biologisch abbaubaren Verunreinigungen der Waschflüssigkeit durch aerobe Mikroorganismen durchströmt bzw. unterströmt das Klarwasser (gereinigte Wasser) eine Tauchwand und/oder läuft in eine Rinne oder ähnliche Vorrichtung, bevor es über eine Leitung (14) als Klarwasser zurück in den Wäscher fließt, wobei vorzugsweise eine Pumpe oder Kreislaufpumpe (12) zwischengeschaltet ist.

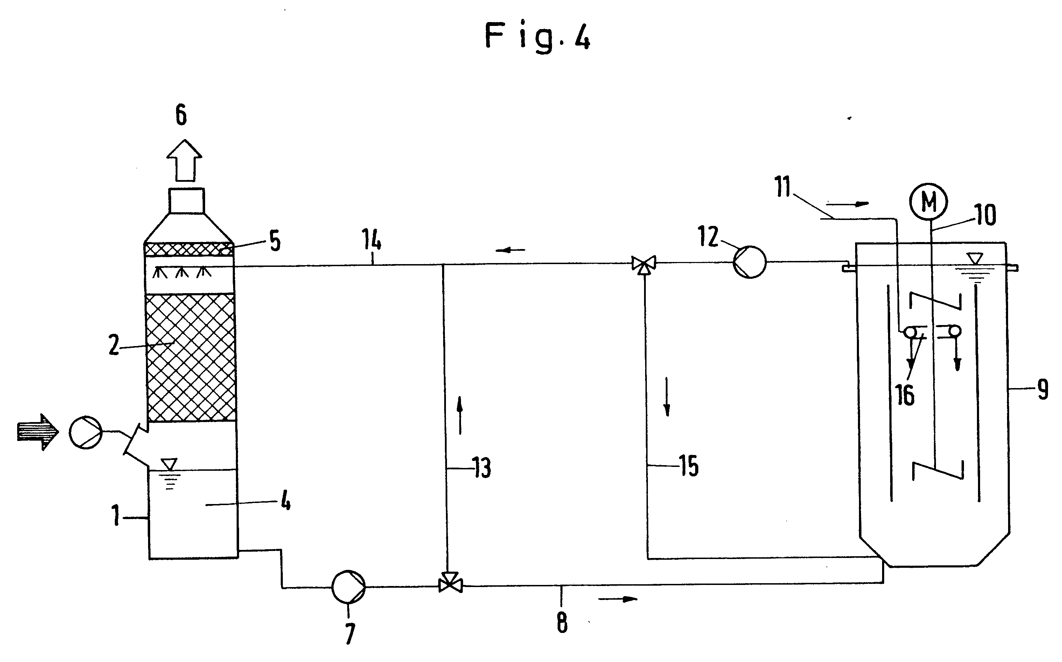

In den Figuren 1 und 4 (Figur 1 ohne, Figur 4 mit Kernschacht) sind bevorzugte Kreislaufführungen zwischen Reaktor und der Gaswaschvorrichtung dargestellt. Dabei wird ein Teil des gereinigten, aus dem Reaktor abgezogenen Wassers (Klarwasser) über die Leitung (15) im Kreislauf zu dem Reaktor geführt und dabei am Reaktorboden oder in der Nähe des Reaktorbodens eingeleitet.

Nach einer weiteren bevorzugten Ausführungsform der Figuren 1 bis 4 wird ein Teilstrom der aus der Gaswaschvorrichtung stammenden Waschflüssigkeit über die Leitung (13) in die Gaswaschvorrichtung zurückgeführt, vorzugsweise zusammen mit dem aus dem Reaktor stammenden gereinigten Wasser.

## Ansprüche

1. Verfahren zur Reinigung von Abgasen durch Wäsche mit einer Adsorptionsmittel-Suspension, enthaltend mindestens ein feinteiliges Adsorptionsmittel mit einem mittleren Körnungsdurchmesser von 0,0001 mm bis 5 mm, die zumindestens einer Gaswaschvorrichtung kontinuierlich zugeführt, dort verteilt und mit dem Abgas in Kontakt gebracht, die Schadstoffe, Verunreinigungen oder abzutrennenden Stoffe oder ein Teil derselben auf biologischem Wege umgesetzt, abgebaut und/oder chemisch oder physikalisch geändert und/oder ganz oder teilweise nachfolgend abgetrennt werden, wobei

a) die Adsorptionsmittel-Suspension in einer Konzentration (durchschnittliche Anwendungskonzentration) von 40 g/l bis 200 g/l, gleichmäßig oder nahezu gleichmäßig in der Gaswaschvorrichtung verteilt,

b) die Adsorptionsmittel-Suspension in der Gaswaschvorrichtung über mindestens eine geordnete Stoffaustauschzone geleitet und in Kontakt mit dem Gas gebracht,

c) danach die adsorptionsmittelhaltige Waschflüssigkeit in mindestens einem, von der Gaswaschvorrichtung getrennt angeordneten Reaktor geleitet, die biologisch abbaubaren oder umwandelbaren Verunreinigungen unter Mitverwendung von aeroben Bakterien und Sauerstoff oder sauerstoffhaltigen Gasen mit den in der Flüssigkeit enthaltenden Gasverunreinigungen unter Zwangsbewegung der adsorptionsmittelhaltigen und aerobe Bakterien enthaltenden Waschflüssigkeit umgesetzt und

d) die nach der Umsetzung entstandene gereinigte Flüssigkeit oder Suspension ganz oder in einem Teilstrom zu der Gaswaschvorrichtung zurückgeführt, dort verteilt und mit dem zu reinigenden Gas erneut in Kontakt gebracht wird, entsprechend DE-PS ... (Patentanmeldung P 38 30 803.7), dadurch gekennzeichnet, daß der für die Umwandlung der abbaubaren Verunreinigungen und für die aeroben Bakterien erforderliche Sauerstoff in Form von Luft, Sauerstoff oder sauerstoffhaltigen Gasen zu mehr als 60 % (bezogen auf den erforderlichen Sauerstoffbedarf), vorzugsweise zu 80 bis 200 % in die obere Hälfte des Reaktors unter Verwendung von Düsen oder kleinen Austrittsöffnungen in einem Mindestabstand von der Flüssigkeitsoberfläche von mehr als 1/10 der Füllhöhe oder mehr als 25 cm Entfernung von der Flüssigkeitsoberfläche in einer Konzentration von 0,2 mg/l bis 10 mg/l Sauerstoff, vorzugsweise 1 mg/l bis 7 mg/l Sauerstoff, (bezogen auf den Sauerstoffgehalt pro l Flüssigkeit im Reaktor) unterhalb mindestens eines axialfördernden Rührers einer mehrstufigen Rührvorrichtung oder eines mehrstufigen Rührers eingeleitet und fein verteilt werden.

2. Verfahren nach Anspruch 1, dadurch gekennzeich net, daß Luft, Sauerstoff oder sauerstoffhaltige Gase unterhalb und in einem Abstand von der Drehebene der ersten und/oder zweiten Rührerdrehebene von mehr als 10 cm, vorzugsweise in einem Abstand von 15 bis 50 cm, eingeleitet wenden und der oder die axialfördernde(n) Rührer die Flüssigkeit, vorzugsweise die im Bereich des mehrstufigen Rührers vorhandene oder gelangende Flüssigkeit in Richtung des Reaktorbodens und von dort an den Reaktorwänden entlang in einem Abstand von den Reaktorwänden in Gegenrichtung zu der Förderrichtung des axialfördernden Rührers nach oben unter Vermeidung von Strombrechern, Stromstörern oder Stromstörstellen leitet.

3. Verfahren nach Ansprüchen 1 und 2, dadurch gekennzeichnet, daß die Umdrehungszahl pro Minute in Abhängigkeit von dem Blatt- oder Propellerradius 5 bis 30, vorzugsweise 8 bis 21 beträgt.

4. Verfahren nach einem oder mehreren der Ansprüche 1 bis 3, dadurch gekennzeichnet, daß eine annähernd parallel zur Rührachse nach unten (zum Reaktorboden) geführte und eine entlang der Seitenwände oder in einem Abstand von den Seitenwänden in Gegenrichtung (nach oben) geführte Strömung durch Einleiten der Abgas enthaltenden Flüssigkeit unterstützt wird.

5. Vorrichtungskombination zur Reinigung von Abgasen, enthaltend mindestens eine Gaswaschvorrichtung für den Kontakt einer Adsorptionssuspension mit dem Abgas, mindestens eine Vorrichtung oder einen Reaktor zum biologischen Abbau der Gasverunreinigungen oder Schadstoffe, unter Mitverwendung von aeroben Bakterien sowie ggf. eine Vorreinigungsvorrichtung, wobei die Vorrichtungen unmittelbar oder mittelbar in an sich bekannter Weise in Verbindung stehen, wobei in der Gaswaschvorrichtung eine geordnete Stoffaustauschzone angeordnet ist, bestehend aus rohrähnlichen oder prismenförmigen Stoffaustauschvorrichtungen oder Rieselkörpern, die ein großes, freies Durchlaß- oder Durchflußvermögen aufweisen, die in, parallel oder annähernd parallel zur Strömungsrichtung, Rieselrichtung oder Durchflußrichtung der Adsorptionsmittelsuspension und/oder senkrecht oder annähernd senkrecht im Waschturm angeordnet sind und der Wirbelreaktor mit mindestens einer Rühr- oder Pumpvorrichtung oder ähnlichen Vorrichtungen zur Zwangsbewegung und Durcheinanderwirbelung der Adsorptionssuspension und aeroben Bakterien versehen ist nach DE-PS ... (Patentanmeldung P 38 30 803.7), dadurch gekennzeichnet, daß die Rührvorrichtung des Reaktors aus mindestens einem mehrstufigen Rührer besteht und die Austrittsöffnungen der Luft- oder Gaszuleitungsvorrichtung in der oberen Hälfte des Reaktors unterhalb des oberen Rührers oder der oberen Rührer angeordnet sind.

6. Vorrichtung nach Anspruch 5, dadurch gekennzeichnet, daß die Austrittsöffnung der Luft- oder Gaszuleitungen in der oberen Hälfte des Reaktors um die Rührerachse in einem gleichen oder annähernd gleichen Abstand von der Rührerachse und/oder die Luft- oder Gasaustrittsöffnung im gleichen oder annähernd gleichen Abstand voneinander angeordnet sind.

7. Vorrichtung nach Ansprüchen 4 und 5, dadurch gekennzeichnet, daß die verteilungsvorrichtungen der Luft- oder Gaszuleitungen und/oder die Austrittsöffnungen für Luft oder Gas im Reaktor mindestens eine Anordnung in Form eines gleichseitigen Mehreckes oder eines Ringes aufweisen und in mindestens einer zur Rührachse senkrechten Ebene oder nahezu senkrechten Ebene angeordnet sind.

8. Vorrichtung nach einem oder mehreren der Ansprüche 5 bis 7, dadurch gekennzeichnet, daß die mehrstufige Rührvorrichtung mindestens zwei, vorzugsweise drei bis acht übereinander angeordnete Rührer aufweist, von denen mindestens einer ein axialfördernder Rührer ist.

9. Vorrichtung nach einem oder mehreren der Ansprüche 5 bis 8, dadurch gekennzeichnet, daß die Austrittsöffnungen oder Düsen der Verteilungsvorrichtungen oder die Austrittsöffnungen oder Düsen der Luft- oder Gaszuleitungen zu mehr als 50 % (bezogen auf die Anzahl der angeordneten Düsen oder Öffnungen), vorzugsweise mehr als 75 %, zu dem Reaktorboden und/oder in die Richtung der unterhalb der Austrittsöffnungen oder Verteilungsvorrichtungen angeordneten Seitenwänden oder Seitenflächen der unteren Reaktorwände oder des Kernschachtes gerichtet sind.

10. Vorrichtung nach einem oder mehreren der Ansprüche 5 bis 9, dadurch gekennzeichnet, daß der Rührerdurchmesser 1/4 bis 8/10 des Durchmessers des Reaktors und/oder 1/4 bis 8/10 des mittleren Durchmessers des um den mehrstufigen Rührer angeordneten Schachtes beträgt.

11. Vorrichtung nach einem oder mehreren der Ansprüche 5 bis 10, dadurch gekennzeichnet, daß die ringförmige Verteilungsvorrichtung unterhalb der ersten und/oder zweiten oberen Rührvorrichtungen, vorzugsweise Blattrühr- und/oder Propellerrührervorrichtung in einem Abstand von der Rührerdrehebene von 5 bis 50 cm, vorzugsweise 10 bis 30 cm, angeordnet, daß die Düsen oder Austrittsöffnungen für den Sauerstoff, die Luft oder die sauerstoffhaltigen Gase zu mehr als 75 % (bezogen auf sämtliche Düsen oder Austrittsöffnungen der Verteilungsvorrichtung) vorzugsweise zu 90 bis 100 % auf der unteren, dem Reaktorboden zugewandten Fläche der ringförmigen Verteilungsvorrichtung angeordnet sind und der Radius des oder der Propeller oder Blätter der Rührer gleich groß, vorzugsweise größer sind als der mittlere Abstand der Düsen oder Austrittsöffnungen von der Rührerachse.

12. Vorrichtung nach einem oder mehreren der Ansprüche 5 bis 11, dadurch gekennzeichnet, daß die Propeller oder Blätter mindestens einer Rührvorrichtung des mehrstufigen Propeller- oder Blattrührers eine Neigung zur Drehebene des Propellers oder Blattes und/oder eine Profilierung, vorzugsweise eine tragflügelähnliche Profilierung, aufweisen.

13. Vorrichtung nach einem oder mehreren der Ansprüche 5 bis 12, dadurch gekennzeichnet, daß die Neigung der Propeller oder Blätter zur Rühr- oder Propellerdrehachse oder Blattdrehachse 5 bis 50°, vorzugsweise 10 bis 30°, beträgt und die Axialförderung mindestens eines Rührers zum Reaktorboden gerichtet ist.

14. Vorrichtung nach einem oder mehreren der Ansprüche 5 bis 13, dadurch gekennzeichnet, daß der Reaktor keine Strombrecher, Stromstörer oder Stromstörstellen aufweist.

15. Vorrichtung nach einem oder mehreren der Ansprüche 5 bis 14, dadurch gekennzeichnet, daß die Eintrittsöffnung für die Abgas, Abluft oder Abwasser enthaltende Flüssigkeit oberhalb oder unterhalb des oberen Rührers und/oder am Reaktorboden, vorzugsweise in der Peripherie des Reaktorbodens angeordnet ist und aus mindestens einer Eintrittsstelle, vorzugsweise mehreren annähernd gleichmäßig über die Peripherie des Reaktorbodens verteilten Eintrittsstellen besteht.

16. Vorrichtung nach einem oder mehreren der Ansprüche 1 bis 15, dadurch gekennzeichnet, daß der obere axialfördernde Rührer in einer Höhe von 2/3 bis 4/5 H (H = Reaktorhöhe) angeordnet ist.

17. Vorrichtung nach einem oder mehreren der Ansprüche 5 bis 16, dadurch gekennzeichnet, daß der Reaktorboden eine konvexe Wölbung aufweist oder eine zylinderstumpf-, pyramidenstumpf-, halbkugel- oder kugelsegmentähnliche Form aufweist.

18. Vorrichtung nach einem oder mehreren der Ansprüche 5 bis 17, dadurch gekennzeichnet, daß im oberen Drittel des Reaktors, vorzugsweise im oberen Viertel des Reaktors und/oder in einem senkrechten Abstand von
mehr als 6 cm, vorzugsweise
mehr als 15 cm,
von dem oberen Rand des Schachtes oder Kernschachtes ein Strömleitvorrichtung, vorzugsweise eine trichterähnliche, kugelsegmentförmige, pyramidenstumpfähnliche Leitvorrichtung, die im wesentlichen frei von Stromstörstellen oder strombrechenden Teilen oder Ausbildungen ist, angeordnet ist.

19. Vorrichtung nach einem oder mehreren der Ansprüche 5 bis 18, dadurch gekennzeichnet, daß der mehrstufige Rührer mit mindestens einem oberen axialfördernden Rührer, vorzugsweise mehreren axialfördernden Rührern in einem zylinderähnlichen oder trichterförmigen Schacht oder in einem im Querschnitt ein gleichseitiges Mehreck bildenden prismatischen Schacht oder Kernschacht, dessen untere Kante
mehr als 7 cm, vorzugsweise
mehr als 20 cm
(gemessen in senkrechter Richtung vom Reaktor boden), vom Reaktorboden angeordnet ist, daß mindestens eine Verteilungsvorrichtung in ringähnlicher Form im Schacht oder Kernschacht unterhalb der ersten und/oder zweiten axialfördernden Rührvorrichtung angebracht ist und im Reaktor keine Trägervorrichtungen oder Trägereinbauten für die Mikroorganismen vorhanden sind, sondern feinpulvrige oder feinteilige Trägerstoffe mit einem mittleren Körnungsdurchmesser
unter 1.000 $\mu$m, vorzugsweise
unter 750 $\mu$m.

# Fig.1

EP 0 377 811 A2

Fig.2

# F i g.3

EP 0 377 811 A2

# Fig.4

EP 0 377 811 A2

# Fig.5

# F i g.6